# EUROPEAN PATENT SPECIFICATION

(11) **EP 4 323 084 B1**
(45) Date of publication and mention of the grant of the patent: **26.02.2025**
(21) Application number: 22723097.6
(22) Date of filing: 14.04.2022
(51) Int. Cl.: B01D 46/00, B01D 46/10, F24F 8/10, F24F 13/075, F24F 13/28

(54) **AIR FILTERING DEVICE**
LUFTFILTERVORRICHTUNG
DISPOSITIF DE FILTRATION D'AIR

(30) Priority: 16.04.2021 CH 4022021
(43) Date of publication of application: 21.02.2024
(73) Proprietor: Zehnder Group International AG, 5722 Gränichen (CH)
(72) Inventor: BLADH, Magnus, 117 61 Stockholm (SE); PAIHO, Janne, 59132 Motala (SE)
(74) Representative: Rentsch Partner AG
(86) International application number: PCT/EP2022/060092
(87) International publication number: WO 2022/219145

(56) References cited:
- EP-A1- 1 433 514
- CN-A- 107 036 197
- US-A- 2 339 629
- US-A1- 2020 003 440

## Description

### FIELD OF THE DISCLOSURE

The present disclosure relates to a cluster of air filtering devices suitable to be arranged in a room or hall for continuously cleaning a therein arranged volume of air.

### BACKGROUND OF THE DISCLOSURE

Air filtering devices suitable to be arranged in a volume of air are known from the prior art.

WO17106648A1, published by Robovent Products Group on 22. 06.201 7 shows an air cleaner unit which comprises an outer casing defined by side walls of substantially greater height than the base. A fan is mounted in the base and an extended filter column is mounted in the housing. The fan is positioned below the extended filter column to draw air with entrained particles into an air inlet and through the extended filter column to exit the housing through an air outlet. The entrained particles are captured on the outer surface of the extended filter column. KR101067147B1, published by HeoYung Sook on 22. 09. 201 1 shows an oil mist collecting apparatus is provided to improve the collecting efficiency of the collecting apparatus by implementing filtering processes using a woven bag filter and an auxiliary filter comprising an inhaling hole which is formed at one side of an outlet, an inlaying fan loading plate and an auxiliary filtering loading plate are combined with the inner upper side of the inhaling hole. Brackets are arranged at both inner side of the auxiliary filtering loading plate. A housing includes a guiding plate in order to form an air flow path space. An inhaling fan discharges filtered air to an outlet side.

WO08008028A1, published by Freshman on 17.01.2008 shows an air filter arrangement which comprising an air channel, a first air filter mounted in the air channel comprising electrostatically chargeable fibres, a second air filter comprising a filter cloth which is flown through by air flowing in an substantial longitudinal direction in the air channel wherein the second air filter is such that as the particle separating ability of the first filter gradually decreases with time the second air filter takes over more and more of the particle separating work.

EP1433514A1, published by Samsung Electronics Co. on 30.06.2004, is directed to an air cleaning apparatus that includes a blowing unit and a filtering unit which are arranged removable from a cabinet to be cleaned. The cabinet may be used as a table. The cabinet is provided with a top panel of a predetermined area. It is open at a bottom thereof and is provided on at least one sidewall thereof with an air outlet port. A fan casing is installed in the cabinet to be drawn out from the cabinet in a horizontal direction. A blowing fan is installed in the fan casing to move air to the air outlet port. A filter casing is installed under the fan casing to be drawn out from the cabinet in the horizontal direction. At least one filter is installed in the filter casing.

US2339629A, published by Modine MFG Co. on 18.01.1944, is directed to a diffusion grille adapted to be disposed transversely of a stream of primary air. It comprises a pair of substantially parallel spaced elongate members each provided with a row of longitudinally spaced openings. A plurality of substantially parallel tubular vanes disposed between said members with their ends are mounted in said openings. Each of said vanes being provided in its lee side with an aspirating slot and having open ends. A flat range is projecting at substantially right angles away from the rear edge of each of said elongate members. A rearwardly curved flange projecting from the front edge of each elongate member. The rear edge of said curved flange being spaced from the adjacent flat flange to provide a passage for secondary air to the open ends of the vanes.

US2020003440A1, published on 02.01.2020 by LG Electronics, is directed to an air conditioner that determines the replacement time of a filter. The air conditioner may include a filter for filtering particles in air that is suctioned. A camera is disposed to monitor the state of the filter. It is suggested to us a controller for analyzing an image of the filter acquired from the camera in order to determine a pollution level of the filter.

### SUMMARY OF THE DISCLOSURE

Especially industrial applications have a need for continuously cleaning of air arranged in larger rooms or halls or a system thereof, comprising a relatively closed volume of air. The air cleaning can take place independent of air conditioning which usually is executed by other systems, which are interconnected to and in fluid communication with the building exterior of the respective room or hall or the system comprising several room or halls encompassing the volume of air to be cleaned. Examples of industrial applications which have a need for air cleaning are factory buildings, assembly lines or storage facilities like warehouses. The air filtering devices according to the present disclosure typically continuously cleans air arranged in a closed volume of air in order to remove airborne contaminants. The air filtering devices are usually arranged in a fixed manner, e.g. hanging from a ceiling, and comprise a housing and at least one therein arranged filter element e.g. a mesh, a weave, a foam or a combination thereof. In addition, the air filtering device comprises a fan which creates an airflow through the filter element by sucking in unfiltered air into the device and sucking or blowing the air through the filter element to remove dirt and contaminants from the air. The filtered air is then distributed in the room. The air filtering device according to the present disclosure is usually foreseen to be operated in a cluster in combination with similar or other devices. Therefore, the air filtering device is designed to distribute the cleaned air in a controlled manner and with sufficient reach, in relation to at least one neighboring air filtering device arranged in the same volume of air.

According to the present invention, at least two air filtering devices are arranged in a cluster being in communication to each other in the volume of air to be cleaned. The air filtering devices interact with each other in that they exchange information received from at least one sensor arrangement arranged in or interconnected to the other air filtering device. If e.g. the at least one filter element arranged in a first air filtering device starts to clog, a sensor arrangement in or interconnected to the first air filtering device may register an increase in pressure difference which indicates the clogging. The sensor arrangement is designed to directly measure at least one relevant parameter. The sensor arrangement can comprise at least one physical sensor, e.g. in the form of at least one out of the group of the following sensors or a combination thereof: pressure sensor, temperature sensor, humidity sensor, power sensor, dust sensor, speed sensor, or a combination of at least two sensors mentioned before. Alternatively, or in addition, the sensor arrangement can be based on at least one calculated sensor value. This can e.g. be achieved in that instead a pressure difference is measured the pressure difference is calculated from the rotor speed of the fan wheel and the power consumption of the fan motor which drives the fan wheel. From there the volume of air can be determined which flows through the air filtering device.

The calculated and/or measured information can be exchanged directly or via a proxy with a second air filtering device and compared to a corresponding value in the second air filtering device. The operation state of the at least two clustered air filtering devices is adjusted with respect to the exchanged values. E.g. when local clogging occurs the most influenced air filtering device reduces its fan power and indicates to at least one nearby second air filtering device which has taken less impact, to at least temporarily increase its fan power. Thereby the air flow in the room changes and the contaminated air is directed to improve the air quality.

In a preferred variation at least one first air filtering device and at least one second air filtering device as described herein above and hereinafter are arranged in the same volume of air in a room or a hall of a building. The air filtering devices are in communication to each other with respect to exchange of information. If appropriate, the first air filtering device interacts with the second air filtering device in that they exchange information received from at least one sensor arrangement arranged in or interconnected to the second air filtering device. The information can be exchanged between the first air filtering device and the second air filtering de-vice directly and/or via a proxy.

An air filtering device according to the present disclosure preferably comprises a situation specific adaptable and therefore versatile modular design as will be described hereinafter in more detail. A further aspect of the present disclosure is directed to a special air moving unit for a versatile air filtering device, which is foreseen to specifically influence the flow distribution and reach of cleaned air in a volume of air. The air moving unit usually comprises a box shaped housing. The box shaped housing may comprise an interface configured to be interconnected to a corresponding interface of a box shaped housing of an air filter unit. Good results can be achieved in that the air travelling through the air moving unit is sucked through at least one interconnected air filter unit which is arranged upstream with respect to the air moving unit. The air moving unit comprises a constriction, which is preferably arranged in a center of the box shaped housing and preferably comprises smooth transition surfaces to support laminar flow of the air which is processed. A fan is arranged in, respectively adjacent to the constriction. The fan typically comprises a fan wheel and a thereto interconnected motor to spin the fan wheel around a fan wheel axis which is usually coaxial to a center axis of the constriction.

In a preferred variation, the air filtering device according to the present disclosure comprises in a longitudinal direction, which can correspond to the direction of the air flow, at least one air filter unit. The air filter unit can comprise an air filter arranged in a box-shaped housing and being accessible by a removable wall section, e.g. a door and an air moving unit which is interconnected to and arranged downstream with respect to the air filter unit. The air moving unit may comprise the same or a different box-shaped housing with an air inlet opening configured to suck in filtered air from a thereto interconnected air filter unit.

The box-shaped housing comprises a - with respect to the inlet - opposite air outlet opening having a smaller diameter than the diameter of the air inlet opening and thereby forming a constriction as mentioned above. The air moving unit further comprises a fan with a motor driven fan wheel interconnected to the constriction and configured to generate an underpressure in the box-shaped housing of the air moving unit. The filtered air, which has already passed the at least one filter, is thereby sucked into the box-shaped housing through the air inlet opening. The sucked in and already filtered air is then pushed into an air distribution unit which is arranged downstream with respect to the fan. In a variation, the air distribution unit also comprises a box-shaped housing interconnected to the fan wheel. The air distribution unit preferably has in a downstream direction a widening cross-section which helps to reduce air speed and turbulences before the air is then pushed out from the air cleaning unit by at least one air vent.

Good results can be achieved when a funnel shaped lead-in is arranged before the constriction in which the fan wheel is arranged, respectively arranged adjacent to. In a preferred variation, the box-shaped housing of the air moving unit comprises a head-wall in which the air outlet opening is arranged. The above mentioned lead-in before the constriction is configured to enable an optimized air flow from the box-shaped housing of the air moving unit towards the fan. The lead-in can be arranged adjacent to the head-wall congruent and circumferentially to the air outlet opening of the box-shaped housing of the air moving unit. In a preferred variation the lead-in protrudes essentially along the direction of the air flow away from the head-wall and towards the fan. The lead-in can be interconnected to the head-wall with fixing means or be made with the head-wall in an integral manner. Good results can be achieved when the air outlet opening of the air moving unit has an essentially circular cross-section.

The air inlet opening of the air moving unit can be protected by a mesh shaped partition wall. The mesh shaped partition wall prevents the fan wheel during operation from objects being drawn into the fan. To adapt to different environmental situations in the same or different rooms the air filtering device preferably has a modular setup. Therefore, the air filtering device comprises in the direction of air flow at least one air filter unit, a thereto interconnected air moving unit which discharges into an air distribution unit. The units are preferably arranged in a stackable manner. Preferably, the units forming the air filtering device are arranged along a common longitudinal axis which is usually straight. Depending on the field of application, the axis can be bent or comprise a corner.

If the air filtering device comprises a number of air filter units, at least two of the number of air filter units can be made in an integral manner, being arranged in the same box-shaped housing. Good results can be achieved, when the fan - preferably consisting of a fan wheel and a thereto interconnected motor to drive the fan - is attached to a head-wall of the box shaped housing by a stand. The fan is preferably arranged - with respect to the inlet opening of the box-shaped housing - on the opposite side of the head-wall. In a preferred variation the stand comprises several streamlined legs, shaped like spider legs. The described arrangement offers the advantage, that access to the fan is possible by removal of the air distribution unit without the need to remove the fan from the box shaped housing of the air moving unit.

For a clustered arrangement and operation at least one control unit can be arranged in the box-shaped housing of the air moving unit and/or the box shaped housing of the air distribution unit. Preferably, the air moving unit comprises a sensor to surveil the condition of the fan. Preferably, all relevant electric installations and control units are arranged in and/or adjacent to the air moving unit. This offers a more flexible modular design in that the other units can be kept passive, i.e. without additional electrical cables and other complicated installations. The control unit and/or sensor can e.g. be arranged at or adjacent to the head-wall of the box-shaped housing of the air moving unit, preferably on the side facing the air inlet opening and being electrically interconnected to the fan. The electric components and the fan both being interconnected to the air moving unit allows a modular assembly. In a preferred variation the electrical components comprising the at least one control unit and/or at least one sensor are solely arranged in or attached to the air moving unit. This allows a fast and efficient assembly or removal of the at least one air filter unit and the air distribution unit without the need for electrical connections.

With respect to low noise and in support of laminar flow, the fan preferably comprises a fan wheel with an axial intake opening and at least one circumferential radial outlet opening having a certain width in axial direction. In mounted position, the axial intake opening of the fan wheel is aligned and tightly interconnected to the air outlet opening of the box-shaped housing of the air moving unit. The fan is usually encapsulated by the box-shaped housing of the air distribution unit.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a perspective view of a first embodiment of the air filtering device according to the present disclosure with a partial cut-out view;
- Fig. 2: a perspective view of the first embodiment of the air filtering device according to Figure 1 in an exploded view;
- Fig. 3: a top view of the first embodiment of the air filtering device according to Figure 1;
- Fig. 4: a partial sectional view of the first embodiment of the air filtering device according to Figure 3;
- Fig. 5: a perspective view of the air moving unit and the air distribution unit of the air filtering device according to according to Figure 1;
- Fig. 6: a perspective view of the air moving unit and the air distribution unit of the air filtering device according to Figure 5 with a partial cut-out view;

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

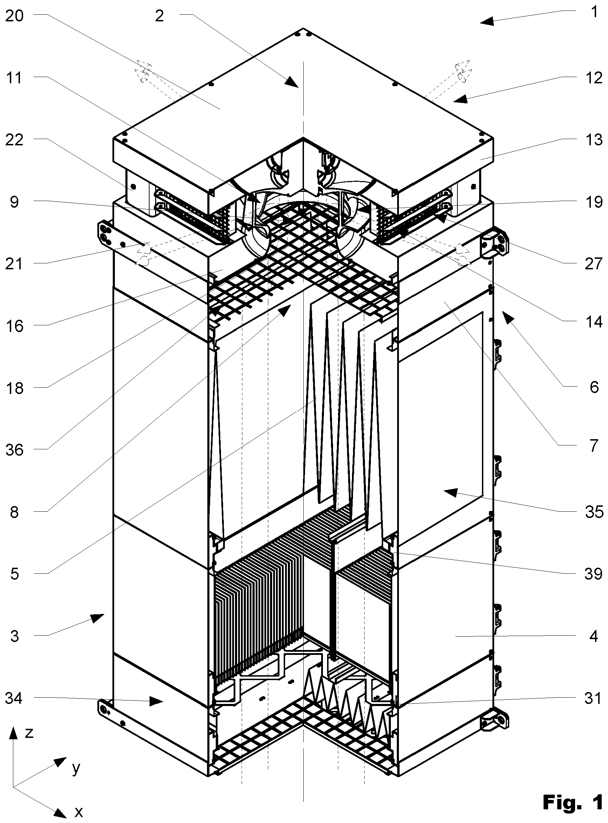

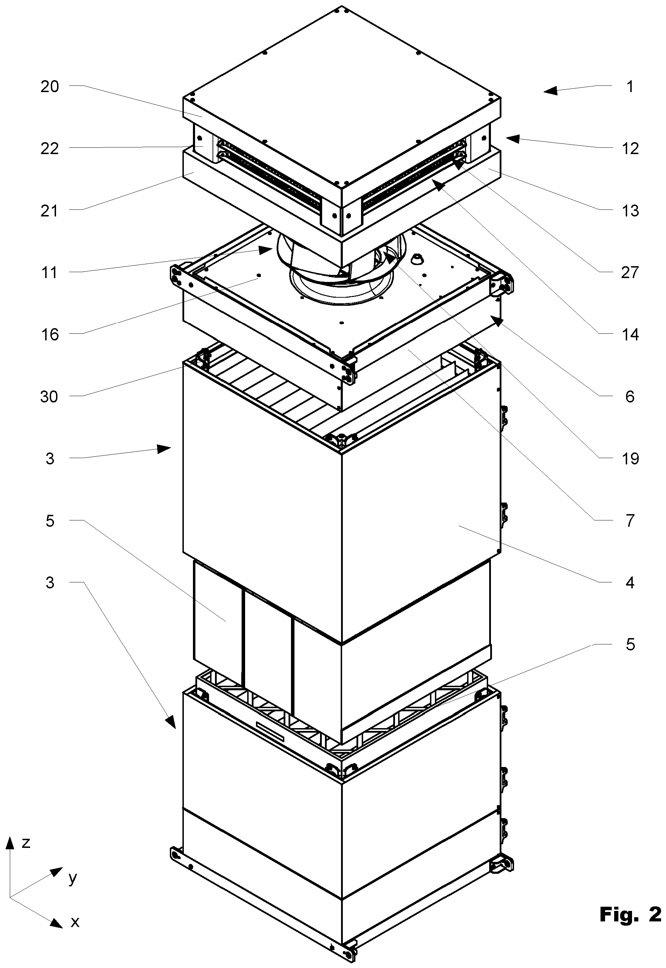

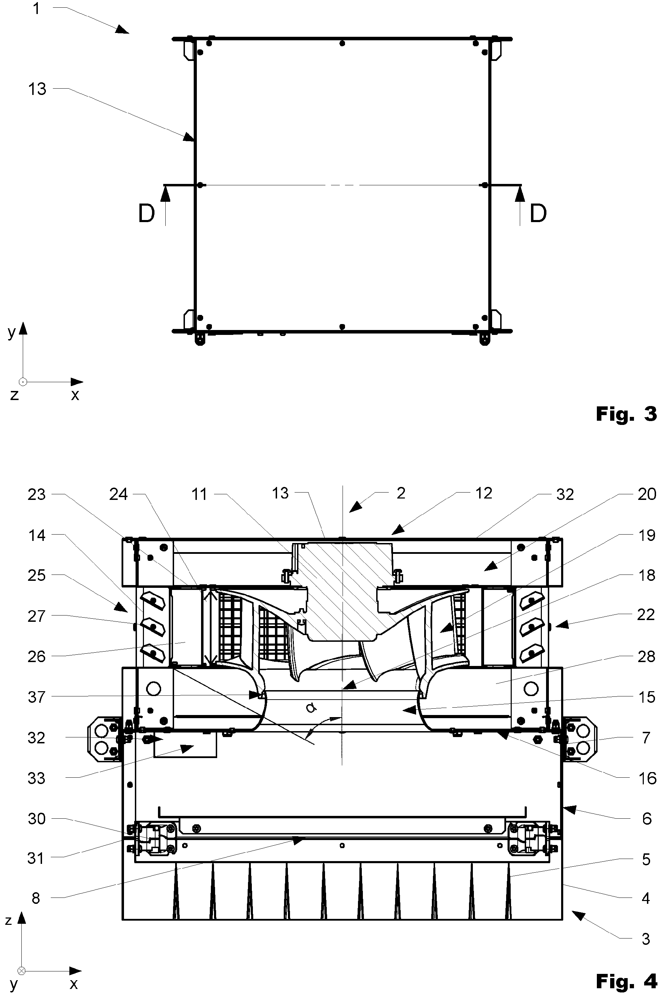

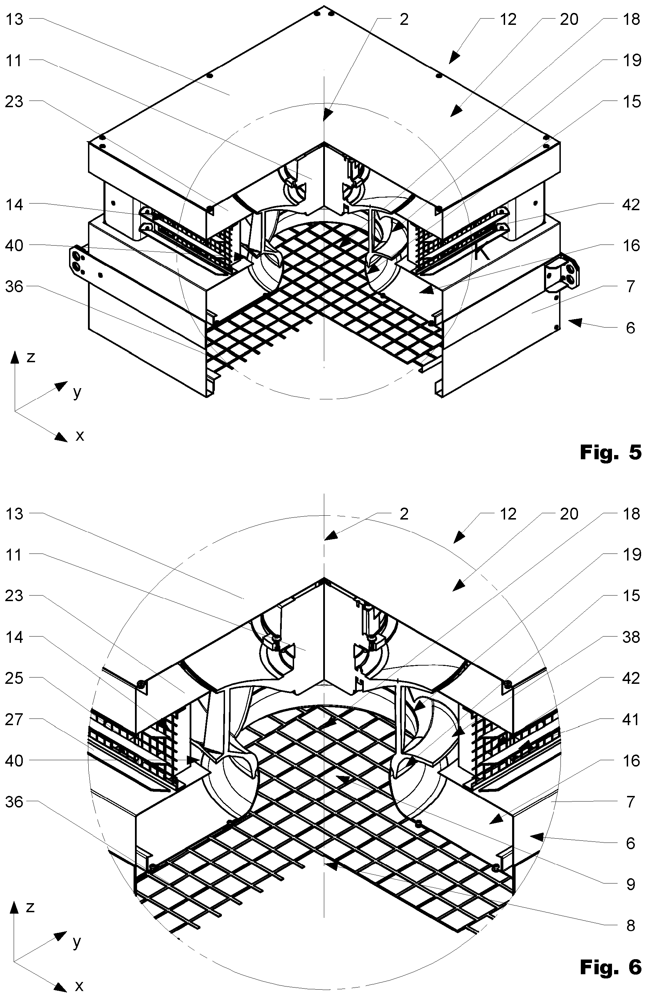

**Figure 1** shows a perspective view of a first embodiment of the air filtering device 1 according to the present disclosure with a partial cut-out view. **Figure 2** shows a perspective view of the first embodiment of the air filtering device 1 according to Figure 1 in an exploded view. **Figure 3** shows a top view of the first embodiment of the air filtering device 1. **Figure 4** shows a partial sectional view of the first embodiment of the air filtering de-vice according to Figure 1. **Figure 4** shows a perspective view of the air moving unit 6and the air distribution unit 12of the air filtering device 1. **Figure 6** shows a perspective view of the air moving unit 6 and the air distribution unit 12 of the air filtering device 1 with a partial cut-out view.

As best visible in **Figure 1****,** the shown embodiment of the air filtering device 1 for cleaning of air in a closed volume of air comprises along the direction 2 of the air flow at least one air filter unit 3 which comprises an air filter 5 arranged in a box-shaped housing 4. In the shown embodiment the air filtering device 1 comprises three air filter units 3 wherein each of the shown air filter units 3 comprises a different type of air filter 5. As best visible in **Figure 2** different sizes of air filter units 3 are possible which makes the air filtering device 1 versatile. In addition, the individual air filter units 3 are interchangeable. Alternatively, also several individual air filter units 3 can be made in an integral manner. The shown air filter units 3 each comprise an individual box-shaped housing 4. The shown embodiment of the air filtering device 1 also comprises an air moving unit 6 which is interconnected to and arranged downstream with respect to the air filter unit 3.

As best visible in **Figure 1** and **Figures 5** and **6,** the air moving unit 6 comprises a box-shaped housing 7 with an air inlet opening 8 configured to receive filtered air from the closed volume of air through the air filter unit 3. The air moving unit 6 further compromises an air outlet opening 9 which is arranged opposite with respect to the box-shaped housing 7. The air outlet opening 9 of the shown embodiment has a smaller diameter 10 than the diameter of the air inlet opening 8. The shown air moving unit 6 comprises a rectangular air inlet opening 8 and a circular air outlet opening 9. The shown embodiment of the air moving unit 6 further comprises a fan 11 interconnected to the air outlet opening 9 configured to draw in the filtered air from the closed volume of air into the box-shaped housing 7 of the air moving unit 6 through the air inlet opening 8 and to push the drawn-in filtered air into an air distribution unit 12. The shown air distribution unit 12 also comprises a box-shaped housing 13 interconnected to the fan 11 and has at least one air vent 14 to blow out the filtered air into the closed volume of air.

As best visible in **Figure 2** the shown embodiment of the air filtering device 1 is designed as a modular air filtering device 1 wherein the at least one air filter unit 3, the air moving unit 6 and the air distribution unit 12 are arranged in a stackable manner. The shown air filtering device 1 is designed as a rectangular air filtering device 1. Alternatively, also configurations of the air filtering device 1 are possible wherein the direction of air flow 2 is bent. Therefore, the geometries of the box-shaped housings 4, 7, 13 can be also non-rectangular. The fan 11 of the shown embodiment is attached to the head-wall 16 of the box-shaped housing 7 of the air moving unit 6. Therefore, the air distribution unit 12 can be removed without the need to remove the fan 11, as the fan 11 remains with the air moving unit 6. The electric components and the fan 11 both being interconnected to the air moving unit 6 allows a modular assembly. The electrical components of the shown embodiment, comprising the at least one control unit 32 and/or at least one sensor arrangement 33, are arranged in or attached to the air moving unit 6. This allows as shown a fast and efficient assembly or removal of the at least one air filter unit 3 and the air distribution unit 12 without the need for additional electrical connections.

As best visible in **Figure 4****,** the shown embodiment of the air filtering device 1 comprises a funnel shaped lead-in 15 which is arranged between the air outlet opening 9 of the air distribution unit 12 and the fan 11. The shown box-shaped housing 7 of the air moving unit 6 of the air filtering device 1 comprises a head-wall 16 in which the air outlet opening 9 is arranged. The shown air outlet opening 9 has a circular cross-section and the thereto interconnected lead-in 15 with a tapered transition which increases again towards the fan 11. The shown lead-in 15 is configured to enable an optimized air flow from the box-shaped housing 7 of the air moving unit 6 towards the fan 11. The lead-in 15 of the shown embodiment is arranged adjacent to the head-wall 16 and is arranged congruent and circumferentially to the air outlet opening 9 of the box-shaped housing 7 of the air moving unit 6. As shown, the lead-in 15 protrudes essentially with respect to the direction of the air flow 2 and away from the head-wall 16 towards the fan 11. The present lead-in 15 is interconnected to the head-wall 16 with fixing means, alternatively it can be also made with the head-wall 16 in an integral manner.

As best visible in **Figures 5 and 6****,** the box-shaped housing also comprises a mesh shaped partition wall 36 which is arranged adjacent to the air inlet opening 8. The mesh shaped partition wall 36 is designed to prevent elements from being drawn into the fan 11. As best visible in **Figure 6****,** the fan 11 of the shown embodiment of the air filtering device 1 is interconnected to the lead-in 15. For a torsional rigid setup, the fan 11 is attached to the head-wall 16 by a stand 17. The fan 11 is thereby arranged with respect to the air inlet opening 8 of the box-shaped housing 7 of the air moving unit 6 on the opposite side of the head-wall 16. In a preferred variation the stand 17 comprises four spider leg shaped connection elements. Preferably at least one control unit 32 and/or at least one sensor arrangement 33 of the air distribution unit 12 is arranged in the box-shaped housing 7 of the air moving unit 6 and/or the box shaped housing 13 of the air distribution unit 12.

As best visible in **Figure 4****,** the at least one control unit 32 and/or at least one sensor arrangement 33 is arranged at the head-wall 16 of the box-shaped housing 7 of the air moving unit 6 on the side facing the air inlet opening 8. The at least one control unit 32 and/or at least one sensor arrangement are electrically interconnected to the fan 11. The shown fan 11 of the air filtering device 1 comprises an axial intake opening 18 and at least one circumferential radial outlet opening 19. The axial intake opening 18 is essentially aligned and interconnected to the air outlet opening 9 of the box-shaped housing 13 of the air moving unit 12. The fan 11 is thereby fully encapsulated by the box-shaped housing 13 of the air distribution unit 1 2. In the shown embodiment the axial intake opening 18 is interconnected to the funnel shaped lead-in 15. For an air tight connection between the axial intake opening 18 of the fan 11 and the lead-in 15, the shown axial intake opening 18 comprises a tapered collar 37 which is arranged in a circumferential manner at the distal end of the axial intake opening 18. The collar 37 of the axial intake opening 18 forms a form lock between the axial intake opening 18 of the fan 11 and a distal end of the lead-in 15. This form lock between the axial intake opening 18 of the fan 11 and a distal end of the lead-in 15 prevents that side air is drawn into the fan 11. This has the positive effect that the overall efficiency is increased and it prevents that especially dust within the air distribution unit 12 or from the environment is sucked in and contaminates the already filtered air. For an optimized flow of air within the fan 11 the proximal end of the axial intake opening 18 can be also funnel shaped wherein the funnel opens up towards the at least one circumferential radial outlet opening 19. The at least one radial outlet opening 19 is defined by at least two fan 11 blades.

As best visible in **Figure 6****,** the box-shaped housing of the air distribution unit 12 of the shown embodiment of the air filtering device 1 comprises an upper 20 and a lower deck 21 spaced a distance apart from each other. The upper 20 and the lower deck 21 are interconnected to each other by four pillars 22. The shown upper 20 and lower deck 21 are connected by four pillar 22s being inwardly offset with respect to the respective corner. The upper 20 and lower deck 21 of the shown embodiment are made of sheet metal. The upper 20 and the lower deck 21 of the shown air filtering device 1 each comprise a bulkhead-wall 23 with the distance essentially corresponding to the axial width 24 of the fan 11. The respective bulkhead-wall 23 is designed in an integral manner with the respective upper 20 and lower deck 21. The bulkhead-walls 23 each have an opening 40 wherein their cross-sections are essentially shaped like the radial contour of the fan 11. In the shown embodiment the openings 40 of the upper and lower bulkhead-wall 23 is essentially circular and arranged co-axially with respect to the air outlet opening 9 of the air moving unit 6. The respective bulkhead-wall 23 of the upper 20 and lower deck 21 is designed to limit the at least one circumferential radial outlet opening 19 of the fan 11, thereby forming an air outlet channel 38. The shown air outlet channel 38 is designed to guide the filtered air which is blown out into the closed volume of air, preferably in a directed manner. In the shown embodiment the air is blown out essentially perpendicular to the direction of the air flow 2. The positive effect of the directed air flow essentially perpendicular to the direction of the air flow 2 is that the resulting bundled air flow reaches further into the closed volume of air, compared to known air filtering devices 1.

As best visible in **Figure 4****,** the shown air distribution unit 12 of the air filtering de-vice 1 comprises several air vents 14 arranged essentially parallel to the direction of the air flow 2 of the air filtering device 1. The shown embodiment comprises four air vents 14 which are distributed equally along the outer surface of the box-shaped housing of the air distribution unit. The four air vents 14 are arranged such that the filtered air is blown out into the closed volume of air in radial direction with respect to the air filtering device 1. The shown air vents 14 each comprise an air outlet opening 9 with at least one first air deflector 26 and at least one second air deflector 27 which are arranged essentially perpendicular to each other. In the shown embodiment the first air deflector 26 comprises a row of ventilation louvers 41 arranged essentially parallel to the direction of the air flow 2 and the second air deflector 27 comprises a second row of ventilation louvers 41 which are arranged essentially perpendicular to the first row of ventilation louvers 41. The first and second row of ventilation louvers 41 is designed to align the air flow of filtered air which is blown out into the closed volume of air.

As best visible in **Figures 5** and **6****,** the first row of ventilation louvers 41 is designed to direct the respective air flow of filtered air is directed essentially perpendicular to the respective lateral surface of the box-shaped housing 13 of the air distribution unit 12. The second row of ventilation louvers 41 is arranged in a movable manner such that the angle of the ventilation louvers 41 can be modified with respect to the respective lateral surface of the box-shaped housing 13 of the air distribution unit 12. The second row of ventilation louvers 41 is preferably designed to direct the respective air flow of filtered air in an angled manner with respect to the respective lateral surface of the box-shaped housing 13 of the air distribution unit 12. Preferably the at least one first 26 and/or the at least one second 27 air deflector of the air filtering device 1 can be arranged adjustable by a motor. Especially when the air filtering device 1 is ceiling mounted an automated adjustment of the first 26 and/or the at least one second 27 air deflector can be achieved without physical interaction with the air filtering device 1.

Preferably the at least one air vent 14 of the air filtering device 1 is incorporated in a removable cassette 29. The at least one air vent 14 of the air filtering device 1 being incorporated in a removable cassette 29 is especially beneficial for an easier assembly and/or easier access or for cleaning or maintenance purposes. The cassette 29 can comprise the at least one first air deflector 26 and at least one second air deflector 27. Additionally, the cassette 29 can also comprise a mesh 42. A mesh 42 with thin wire geometries and large mesh spacing still enables a comparatively good air flow and also prevents elements from entering the air distribution unit 12 that could potentially damage the fan 11.

As best visible in **Figure 2****,** the air filter units 3, the air moving unit 6 and the air distribution unit 12 of the shown embodiment are each designed to be stackable and interchangeable with one another. Therefore, the shown box-shaped housing 4 of the air filter unit 3 and/or the box-shaped housing 7 of the air moving unit 6 and/or the box-shaped housing 13 of the air distribution unit 12of the air filtering device 1 are arranged detachable from each other. The shown air filter units 3 are designed such that different types of air filters can be arranged within the same box-shaped housing 4. In the shown embodiment the air filtering device 1 comprises three air filter units 3 wherein each of the air filter units 3 comprises a different type of air filter 5. This modularity makes it possible that the air filtering device 1 is customizable regarding the size and the filtering effect, depending the size of the closed volume of air surrounding the air filtering device 1.

The shown air filtering device 1 according to any of **Figures 1** to **4****,** can be adjusted depending on the pollution level and the type of air pollution of the closed volume of air. The shown box-shaped housings 4 of the air filter units 3 and/or the box-shaped housing 7 of the air moving unit 6 and/or the box-shaped housing 13 of the air distribution unit 12 of the air filter unit 3 are interconnectable to each other by quick lock connectors 30. Each of the box-shaped housings 4, 7, 13 can comprise a seal to interconnect the box-shaped housings 4, 7, 13 to each other in an air tight manner. As best visible in **Figure 4****,** the shown quick lock connectors 30 are designed with a male and corresponding female element. In the shown embodiment the quick lock connectors 30 are arranged at the corners of the box-shaped housings 4, 7, 13 of the air filtering 3 and/or air moving 6 and/or air distribution unit 12. Being arranged at the corners is especially beneficial for a torsionally rigid interconnection of the respective box-shaped elements.

As best visible in **Figure 1****,** the shown box-shaped housing 4 of the air filter unit 3 and/or the box-shaped housing 7 of the air moving unit 6 and/or the box-shaped housing 13 of the air distribution unit 12 of the air filtering device 1 are each made from a number of plate-shaped elements 34 made from sheet metal. The plate-shaped elements 34 are bended and interconnected with screws and rivet joints. For enhancing the stability, the shown respective box-shaped housings 4, 7, 13 each comprise at least one frame 39 which is arranged in a circumferential manner. The shown box-shaped housings 4, 7, 13 comprise two frames 39 wherein the respective frame is arranged at the respective end of the box-shaped housings 4, 7, 13 with respect to the direction of the air flow, which corresponds to a longitudinal direction 2 in the shown embodiment. The seal between the box-shaped housings 4, 7, 13 is made of a foam or a polymer to seal the respective box-shaped housings 4, 7, 13 with respect to each other. The frame 39 can be made of a perforated plate or a mesh which is bent into shape. In an alternative embodiment the box-shaped housing 4 of the air filter unit 3 of the air filtering device 1 comprises at least one door 35 which is arranged such that the air filter 5 arranged within the box-shaped housing 4 can be replaced without disassembling the air filtering de-vice 1.

### LIST OF DESIGNATIONS

- 1: Air filtering device
- 2: Direction (air flow)
- 3: Air filter unit
- 4: Box-shaped housing (air filter unit)
- 5: Air filter
- 6: Air moving unit
- 7: Box-shaped housing (air moving unit)
- 8: Air inlet opening
- 9: Air outlet opening
- 10: Smaller diameter (air outlet opening)
- 11: Fan
- 12: Air distribution unit
- 13: Box-shaped housing (air distribution unit)
- 14: Air vent
- 15: Lead-in
- 16: Head-wall
- 17: Stand
- 18: Axial intake opening (fan)
- 19: Radial outlet opening (fan)
- 20: Upper deck
- 21: Lower deck
- 22: Pillar
- 23: Bulkhead-wall
- 24: Axial width (fan)
- 25: Air outlet opening (air vent)
- 26: First air deflector
- 27: Second air deflector
- 28: Motor (Deflector)
- 29: Casette
- 30: Quick lock connectors
- 31: Seal
- 32: Control unit
- 33: Sensor arrangement
- 34: Plate-shaped element
- 35: Door (box-shaped housing)
- 36: Partition wall
- 37: Collar (fan)
- 38: Air outlet channel
- 39: Frame
- 40: Openings (bulkhead-wall)
- 41: Ventilation louvers
- 42: Mesh

## Claims

1. A cluster of air filtering devices (1) comprising at least one first air filtering device (1) and at least one second air filtering device (1), wherein said filtering devices (1) are each configured to clean air in a closed volume of air, the air filtering devices (1) each comprise in a direction (2) of an air flow:
a. at least one air filter unit (3) comprising an air filter (5) arranged in a box-shaped housing (4);
b. an air moving unit (6) interconnected to and arranged downstream with respect to the air filter unit (3) comprising
i. a box-shaped housing (7) with an air inlet opening (8) configured to receive filtered air from the closed volume of air through the air filter unit (3) and with respect to the box-shaped housing (7) opposite an air outlet opening (9) comprising a constriction having a smaller diameter (10) than the diameter of the air inlet opening (8);
ii. a fan (11) interconnected to the air outlet opening (9) configured to draw in the filtered air from the air filter unit into the box-shaped housing (7) through the air inlet opening (8) and to push the filtered air into an air distribution unit (12);
c. the air distribution unit (12) comprising a box-shaped housing (13) interconnected to the fan (11) and having at least one air vent (14) to distribute the filtered air into the closed volume of air, **characterized in that**
said air filtering devices (1) are arranged in the same volume of air in a room or a hall of a building and are in communication to each other with respect to exchange of information, wherein the first air filtering device (1) interacts with the second air filtering device (1) **in that** they exchange information received from at least one sensor arrangement arranged in or interconnected to the second air filtering device (1) and the information exchanged between the first air filtering device (1) and the second air filtering device (1) is exchanged directly and/or via a proxy and compared to a corresponding value in the second air filtering device (1) and the operation state of the at least two clustered air filtering devices (1) is adjusted with respect to the exchanged values.

2. The cluster of air filtering devices (1) according to claim 1,**wherein** a funnel shaped lead-in (15) is arranged between the air outlet opening (9) and the air inlet opening (8) of the box-shaped housing (7) of the air moving unit (6) and/or wherein the lead-in (15) is arranged between the air outlet opening (9) and the fan (11).

3. The cluster of air filtering devices (1) according to claim 1 or 2, **wherein** the box-shaped housing (7) of the air moving unit (6) comprises a head-wall (16) in which the air outlet opening (9) is arranged and wherein the fan (11) is preferably attached to the head-wall (16) by a stand (17) and with respect to the air inlet opening (8) of the box-shaped housing (7) of the air moving unit (6) arranged on the opposite side of the head-wall (16)..

4. The cluster of air filtering devices (1) according to at least one of the preceding claims, **wherein** the fan (11) comprises a fan wheel with an axial intake opening (18) in a mounted position, being interconnected to the air outlet opening (9) of the box-shaped housing (7) of the air moving unit (6) and at least one circumferential radial outlet opening (18).

5. The cluster of air filtering devices (1) according to at least one of the preceding claims, **wherein** the box-shaped housing (13) of the air distribution unit (12) comprises an upper (20) and a lower deck (21) spaced a distance apart from each other and being interconnected to each other by at least one pillar (22).

6. The cluster of air filtering devices (1) according to claims 4 and 5, **wherein** the upper (20) and the lower deck (21) deck each comprise a bulkhead-wall (23) with the distance essentially corresponding to the axial width (24) of the at least one circumferential radial outlet opening (19) of the fan (11).

7. The cluster of air filtering devices (1) according to at least one of the preceding claims, **wherein** the air distribution unit (12) comprises several air vents (14) arranged at an angle (α) with respect to the direction (2) of the air flow within the air filtering device (1) and/or wherein several air vents (14) are arranged in a circumferential direction with respect to each other.

8. The cluster of air filtering devices (1) according to at least one of the preceding claims, **wherein** the at least one air vent (14) comprises an air outlet opening (25) with at least one first air deflector (26) and at least one second air deflector (27) which are arranged essentially perpendicular to each other and wherein the at least one first (26) and/or the at least one second (27) air deflector are preferably arranged adjustable by a motor (28).

9. The cluster of air filtering devices (1) according to at least one of the preceding claims, **wherein** the box-shaped housing (4) of the air filter unit (3) and/or the box-shaped housing (7) of the air moving unit (6) and/orthe box-shaped housing (13) of the air distribution unit (12) are interconnected to each other by quick lock connectors (30).

10. The cluster of air filtering devices (1) according to at least one of the preceding claims, **comprising** at least one control unit (32) and/or at least one sensor arrangement (33) suitable to interconnect to a control unit of a corresponding other air filtering device arranged in the same volume of air to exchange information on the state of operation and/or wherein at least one control unit (32) and/or at least one sensor arrangement (33) are arranged in or attached to the box-shaped housing (7) of the air moving unit (6) and/or the box shaped housing (13) of the air distribution unit (12).

11. The cluster of air filtering devices (1) according to claim 10, **wherein** the sensor arrangement (33) comprises at least one physical sensor, in form of at least one out of the group of the following sensors or a combination thereof: pressure sensor, temperature sensor, humidity sensor, power sensor, dust sensor, speed sensor and/or wherein the sensor arrangement is based on at least one calculated sensor value.

12. The cluster of air filtering devices (1) according to at least one of the preceding claims, **wherein** the at least one first air filtering device (1) and at least one second air filtering device (1) are arranged hanging from a ceiling of the room or hall of the building.

## Patentansprüche

1. Eine Gruppe von Luftfiltervorrichtungen (1), die mindestens eine erste Luftfiltervorrichtung (1) und mindestens eine zweite Luftfiltervorrichtung (1) umfasst, wobei die Filtervorrichtungen (1) jeweils so konfiguriert sind, dass sie Luft in einem geschlossenen Luftvolumen reinigen, wobei die Luftfiltervorrichtungen (1)jeweils entlang einer Richtung (2) eines Luftstroms Folgendes umfassen:
a. mindestens eine Luftfiltereinheit (3) umfassend einen Luftfilter (5), der in einem kastenförmigen Gehäuse (4) angeordnet ist;
b. eine Luftbewegungseinheit (6), die mit der Luftfiltereinheit (3) wirkverbunden und stromabwärts von dieser angeordnet ist, mit
i. einem kastenförmigen Gehäuse (7) mit einer Lufteinlassöffnung (8), die dazu konfiguriert ist gefilterte Luft aus dem geschlossenen Luftvolumen durch die Luftfiltereinheit (3) aufzunehmen und einer in Bezug auf das kastenförmige Gehäuse (7) gegenüberliegenden Luftauslassöffnung (9), die eine Einschnürung mit einem kleineren Durchmesser (10) als dem Durchmesser der Lufteinlassöffnung (8) aufweist;
ii. ein Gebläse (11), das mit der Luftauslassöffnung (9) wirkverbunden ist und dazu konfiguriert ist die gefilterte Luft von der Luftfiltereinheit durch die Lufteinlassöffnung (8) in das kastenförmige Gehäuse (7) einzusaugen und die gefilterte Luft in eine Luftverteilereinheit (12) zu drücken;
c. die Luftverteilereinheit (12) umfasst ein kastenförmiges Gehäuse (13), das mit dem Gebläse (11) verbunden ist und mindestens eine Entlüftungsöffnung (14) zum Verteilen der gefilterten Luft in das geschlossene Luftvolumen aufweist, **dadurch gekennzeichnet, dass**
die Luftfiltervorrichtungen (1) in demselben Luftvolumen in einem Raum oder einer Halle eines Gebäudes angeordnet sind und kommunikativ in Bezug auf den Informationsaustausch miteinander in Verbindung stehen, wobei die erste Luftfiltervorrichtung (1) mit der zweiten Luftfiltervorrichtung (1) zusammenwirkt, indem sie Informationen austauschen, die von mindestens einer Sensoranordnung empfangen werden, die in der zweiten Luftfiltervorrichtung (1) angeordnet oder mit dieser verbunden ist, und die zwischen der ersten Luftfiltervorrichtung (1) und der zweiten Luftfiltervorrichtung (1) ausgetauschten Informationen direkt und/oder über einen Proxy ausgetauscht und mit einem entsprechenden Wert in der zweiten Luftfiltervorrichtung (1) verglichen werden und der Betriebszustand der mindestens zwei zusammengeschalteten Luftfiltervorrichtungen (1) in Bezug auf die ausgetauschten Werte angepasst wird.

2. Die Gruppe von Luftfiltervorrichtungen (1) nach Anspruch 1, **wobei** zwischen der Luftauslassöffnung (9) und der Lufteinlassöffnung (8) des kastenförmigen Gehäuses (7) der Luftbewegungseinheit (6) eine trichterförmige Zuleitung (15) angeordnet ist und/oder wobei die Zuleitung (15) zwischen der Luftauslassöffnung (9) und dem Gebläse (11) angeordnet ist.

3. Die Gruppe von Luftfiltervorrichtungen (1) nach Anspruch 1 oder 2, **wobei** das kastenförmige Gehäuse (7) der Luftbewegungseinheit (6) eine Stirnwand (16) aufweist, in der die Luftauslassöffnung (9) angeordnet ist, und wobei das Gebläse (11) vorzugsweise mit einem Ständer (17) an der Stirnwand (16) befestigt ist und in Bezug auf die Lufteinlassöffnung (8) des kastenförmigen Gehäuses (7) der Luftbewegungseinheit (6) auf der gegenüberliegenden Seite der Stirnwand (16) angeordnet ist.

4. Die Gruppe von Luftfiltervorrichtungen (1) nach mindestens einem der vorhergehenden Ansprüche, **wobei** das Gebläse (11) ein Lüfterrad mit einer axialen Einlassöffnung (18) umfasst, das in einer montierten Position mit der Luftauslassöffnung (9) des kastenförmigen Gehäuses (7) der Luftbewegungseinheit (6) und mindestens einer umlaufenden radialen Auslassöffnung (18) wirkverbunden ist.

5. Die Gruppe von Luftfiltervorrichtungen (1) nach mindestens einem der vorhergehenden Ansprüche, **wobei** das kastenförmige Gehäuse (13) der Luftverteilereinheit (12) ein Oberdeck (20) und ein Unterdeck (21) aufweist, die voneinander beabstandet sind und durch mindestens eine Stütze (22) miteinander verbunden sind.

6. Die Gruppe von Luftfiltervorrichtungen (1) nach den Ansprüchen 4 und 5, **wobei** das Oberdeck (20) und das Unterdeck (21 ) jeweilseine Trennwand (23) aufweisen, deren Abstand im Wesentlichen der axialen Spannweite (24) der mindestens einen umlaufenden radialen Auslassöffnung (19) des Gebläses (11) entspricht.

7. Die Gruppe von Luftfiltervorrichtungen (1) nach mindestens einem der vorhergehenden Ansprüche, **wobei** die Luftverteilereinheit (12) mehrere Entlüftungsöffnungen (14) aufweist, die in einem Winkel (α) zur Richtung (2) der Luftströmung innerhalb der Luftfiltervorrichtung (1) angeordnet sind und/oder wobei die mehreren Entlüftungsöffnungen (14) in Umfangsrichtung zueinander angeordnet sind.

8. Die Gruppe von Luftfiltervorrichtungen (1) nach mindestens einem der vorhergehenden Ansprüche, **wobei** die mindestens eine Entlüftungsöffnung (14) eine Luftauslassöffnung (25) mit mindestens einem ersten Luftleitblech (26) und mindestens einem zweiten Luftleitblech (27) aufweist, die im Wesentlichen senkrecht zueinander angeordnet sind und wobei das mindestens eine erste (26) und/oder das mindestens eine zweite (27) Luftleitblech vorzugsweise motorisch (28) verstellbar angeordnet sind.

9. Die Gruppe von Luftfiltervorrichtungen (1) nach mindestens einem der vorhergehenden Ansprüche, **wobei** das kastenförmige Gehäuse (4) der Luftfiltereinheit (3) und/oder das kastenförmige Gehäuse (7) der Luftbewegungseinheit (6) und/oder das kastenförmige Gehäuse (13) der Luftverteilereinheit (12) durch Schnellverschlüsse (30) miteinander verbunden sind.

10. Die Gruppe von Luftfiltervorrichtungen (1) nach mindestens einem der vorhergehenden Ansprüche, **umfassend** mindestens eine Steuereinheit (32) und/oder mindestens eine Sensoranordnung (33), die zur Verbindung mit einer Steuereinheit einer entsprechenden anderen Luftfiltervorrichtung, die in demselben Luftvolumen angeordnet ist, geeignet ist, um Informationen über den Betriebszustand auszutauschen, und/oder wobei mindestens eine Steuereinheit (32) und/oder mindestens eine Sensoranordnung (33) in dem kastenförmigen Gehäuse (7) der Luftbewegungseinheit (6) und/oder dem kastenförmigen Gehäuse (13) der Luftverteilereinheit (12) angeordnet oder daran befestigt sind.

11. Die Gruppe von Luftfiltervorrichtungen (1) nach Anspruch 10, **wobei** die Sensoranordnung (33) mindestens einen physikalischen Sensor umfasst, in Form von mindestens einem aus der Gruppe der folgenden Sensoren oder einer Kombination davon: Drucksensor, Temperatursensor, Feuchtigkeitssensor, Leistungssensor, Staubsensor, Geschwindigkeitssensor und/oder wobei die Sensoranordnung auf mindestens einem berechneten Sensorwert basiert.

12. Die Gruppe von Luftfiltervorrichtungen (1) nach mindestens einem der vorhergehenden Ansprüche, **wobei** die mindestens eine erste Luftfiltervorrichtung (1) und die mindestens eine zweite Luftfiltervorrichtung (1) hängend an einer Decke des Raumes oder der Halle des Gebäudes angeordnet sind.

## Revendications

1. Un groupe de dispositifs de filtrage d'air (1) comprenant au moins un premier dispositif de filtrage d'air (1) et au moins un second dispositif de filtrage d'air (1), dans lequel lesdits dispositifs de filtrage (1) sont chacun configurés pour nettoyer l'air dans un volume d'air fermé, les dispositifs de filtrage d'air (1) comprenant chacun une direction (2) d'un flux d'air :
a. au moins une unité de filtrage d'air (3) comprenant un filtre à air (5) disposé dans un boîtier (4) en forme de boîte;
b. une unité de mouvement d'air (6) interconnectée et disposée en aval par rapport à l'unité de filtrage d'air (3) comprenant
i. un boîtier en forme de boîte (7) avec une ouverture d'entrée d'air (8) configurée pour recevoir l'air filtré du volume d'air fermé à travers l'unité de filtrage d'air (3) et par rapport à le boîtier en forme de boîte (7) en face d'une ouverture de sortie d'air (9) comprenant une constriction ayant un diamètre plus petit (10) que le diamètre de l'ouverture d'entrée d'air (8) ;
ii. un ventilateur (11) interconnectée à l'ouverture de sortie d'air (9), configuré pour aspirer l'air filtré de l'unité de filtrage d'air dans le boîtier en forme de boîte (7) par l'ouverture d'entrée d'air (8) et pour pousser l'airfiltré dans une unité de distribution d'air (12) ;
c. l'unité de distribution d'air (12) comprenant un boîtier en forme de boîte (13) interconnectée à le ventilateur (11) et comportant au moins un évent d'air (14) pour distribuer l'air filtré dans le volume d'air fermé, **caractérisée par le fait que**
lesdits dispositifs de filtrage de l'air (1) sont disposés dans le même volume d'air dans une pièce ou un hall d'un bâtiment et sont en communication les uns avec les autres en ce qui concerne l'échange d'informations, dans lequel le premier dispositif de filtrage de l'air (1) interagit avec le second dispositif de filtrage de l'air (1) en ce sens qu'ils échangent des informations reçues d'au moins un capteur placé dans le second dispositif de filtrage de l'air (1) ou interconnecté à celui-ci, et que les informations échangées entre le premier dispositif de filtrage de l'air (1) et le second dispositif de filtrage de l'air (1) sont échangées directement et/ou par l'intermédiaire d'un proxy et comparées à une valeur correspondante dans le second dispositif de filtrage de l'air (1), et que l'état de fonctionnement de les au moins deux dispositifs de filtrage de l'air en grappe (1) est ajusté en fonction des valeurs échangées.

2. Le groupe de dispositifs de filtrage d'air (1) selon la revendication 1, **dans lequel** une entrée en forme d'entonnoir (15) est disposée entre l'ouverture de sortie d'air (9) et l'ouverture d'entrée d'air (8) de le boîtier en forme de boîte (7) de l'unité de mouvement d'air (6) et/ou dans lequel l'entrée en forme d'entonnoir (15) est disposée entre l'ouverture de sortie d'air (9) et le ventilateur (11).

3. Le groupe de dispositifs de filtrage d'air (1) selon la revendication 1 ou 2, **dans lequel** le boîtier en forme de boîte (7) de l'unité de mouvement d'air (6) comprend une paroi de tête (16) dans laquelle l'ouverture de sortie d'air (9) est disposée et dans laquelle le ventilateur (11) est de préférence fixé à la paroi de tête (16) par un support (17) et par rapport à l'ouverture d'entrée d'air (8) de le boîtier en forme de boîte (7) de l'unité de mouvement d'air (6) disposée sur la partie opposé de la paroi de tête (16).

4. Le groupe de dispositifs de filtrage d'air (1) selon au moins l'une des revendications précédentes, **dans lequel** le ventilateur (11) comprend une roue de ventilateur avec une ouverture d'admission axiale (18) en position montée, interconnectée à l'ouverture de sortie d'air (9) de le boîtier en forme de boîte (7) de l'unité de mouvement d'air (6) et au moins une ouverture de sortie radiale circonférentielle (18).

5. Le groupe de dispositifs de filtrage d'air (1) selon au moins l'une des revendications précédentes, **dans** lequel le boîtier en forme de boîte (13) de l'unité de distribution d'air (12) comprend un étage supérieur (20) et un étage inférieur (21) espacés l'un de l'autre et interconnectée l'un à l'autre par au moins un pilier (22).

6. Le groupe de dispositifs de filtrage d'air (1) selon les revendications 4 et 5, **dans lequel** l'étage supérieur (20) et l'étage inférieur (21) comprennent chacun une cloison de séparation (23) dont la distance correspond essentiellement à la largeur axiale (24) de l'au moins une ouverture de sortie radiale circonférentielle (19) de le ventilateur (11).

7. Le groupe de dispositifs de filtration d'air (1) selon au moins l'une des revendications précédentes, **dans** lequel l'unité de distribution d'air (12) comprend plusieurs évents d'air (14) disposés à un angle (α) par rapport à la direction (2) du flux d'air à l'intérieur du dispositif de filtration d'air (1) et/ou dans lequel plusieurs d'évent d'air (14) sont disposés dans une direction circonférentielle l'un par rapport à l'autre.

8. Le groupe de dispositifs de filtrage d'air (1) selon au moins l'une des revendications précédentes, **dans lequel** l'au moins d'évent d'air (14) comprend une ouverture de sortie d'air (25) avec au moins un premier déflecteur d'air (26) et au moins un second déflecteur d'air (27) qui sont disposés essentiellement perpendiculairement l'un à l'autre et dans lequel au moins un premier (26) et/ou au moins un second (27) déflecteur d'air sont de préférence disposés de manière réglable par un moteur (28).

9. Le groupe de dispositifs de filtrage d'air (1) selon au moins l'une des revendications précédentes, **dans lequel** le boîtier en forme de boîte (4) de l'unité de filtrage d'air (3) et/ou le boîtier en forme de boîte (7) de l'unité de mouvement d'air (6) et/ou le boîtier en forme de boîte (13) de l'unité de distribution d'air (12) sont interconnectés les uns aux autres par des connecteurs à verrouillage rapide (30).

10. Le groupe de dispositifs de filtrage d'air (1) selon au moins l'une des revendications précédentes, **comprenant** au moins une unité de commande (32) et/ou au moins un dispositif de capteur (33) apte à se connecter à une unité de commande d'un autre dispositif de filtrage d'air correspondant disposé dans le même volume d'air pour échanger des informations sur l'état de fonctionnement et/ou dans lequel au moins une unité de commande (32) et/ou au moins un dispositif de capteur (33) sont disposés dans ou attachés à le boîtier en forme de boîte (7) de l'unité de mouvement d'air (6) et/ou au boîtier en forme de boîte (13) de l'unité de distribution d'air (12).

11. Le groupe de dispositifs de filtrage d'air (1) selon la revendication 10, **dans lequel** le dispositif de capteur (33) comprend au moins un capteur physique, sous la forme d'au moins un des capteurs suivants ou d'une combinaison de ceux-ci : capteur de pression, capteur de température, capteur d'humidité, capteur depuissance, capteur de poussière, capteur de vitesse et/ou dans lequel l'agencement de capteurs est basé sur au moins une valeur de capteur calculée.

12. Le groupe de dispositifs de filtrage d'air (1) selon au moins une des revendications précédentes, **dans lequel** l'au moins de premier dispositif de filtrage d'air (1) et l'au moins de deuxième dispositif de filtrage d'air (1) sont suspendus à un plafond de la pièce ou du hall du bâtiment.
